# EUROPEAN PATENT APPLICATION

(11) **EP 0 826 732 A2**
(43) Date of publication of application: **04.03.1998**
(21) Application number: 97114358.1
(22) Date of filing: 20.08.1997
(51) Int. Cl.: C08L 83/04, C08K 5/54

(54) **Silicone release coating compositions**

(30) Priority: 28.08.1996 US 704063
(71) Applicant: DOW CORNING CORPORATION, Midland Michigan 48686-0994 (US)
(72) Inventor: Bilgrien, Carl Joseph, Midland, Michigan 48642 (US); Mealey, Shawn Keith, Midland, Michigan 48640 (US); Skinner, Michael Ward, Midland, Michigan 48642 (US)
(74) Representative: Patentanwälte Sternagel & Fleischer

(57) **Abstract**

The present invention introduces a method of making silicone release coating compositions comprising mixing a vinyl functional organopolysiloxane, an organohydrogensilicon compound, a platinum group metal catalyst and certain silylated acetylenic inhibitors. The present invention further provides a method of making silicone release coating compositions comprising mixing an organopolysiloxane compound having alkenyl groups which contain at least four carbon atoms, an organohydrogensilicon compound, a platinum group metal-containing catalyst and a silylated acetylenic compound having its formula selected from the group consisting of: HC≡C-Q-O-Si-(R³)₃,
HC≡C-Q-O-Si(R³)₂-O-Q-C≡CH and H-Si-(O-Q-C≡CH)₃ where R³ is independently selected from the group consisting of hydrogen atom, monovalent hydrocarbon radicals free of aliphatic unsaturation having from 1 to 20 carbon atoms and an alkenyl group and wherein Q is a divalent hydrocarbon radical of at least 3 carbon atoms, with the proviso that there is at most one silicon-bonded hydrogen group or one silicon-bonded alkenyl group per silylated acetylenic compound.

## Description

The present invention relates to curable silicone release coatings that cure at low temperatures which contain silylated acetylenic inhibitors.

Acetylenic compounds suitable as inhibitors in curable silicone coating compositions have been disclosed. This prior art is generally represented by the following: US Patents 4,465,818; 4,472,563; 4,559,396; 5,082,894; 5,210,126; 5,270,425; 3,445,420; 4,032,502 and 4,472,562. JP-A 1-12786 (1989) discloses a similar silicone composition for mold-release paper from the international prior art.

The present invention provides a method of making silicone release coating compositions comprising the mixing of an alkenyl functional organopolysiloxane, an organohydrogensilicon compound, a platinum group metal catalyst and certain silylated acetylenic inhibitors.

It is also an object of this invention to produce silicone release coatings which cure quickly at low temperatures on heat sensitive substrates.

This object has been attained by a curable silicone release coating composition comprising:
(A) an alkenyl functional organopolysiloxane compound having a formula selected from the group consisting of:
   (i) R¹₃SiO(R₂SiO)ₓ(RR¹SiO)_{y}SiR¹₃,
   (ii) R¹₃SiO(R₂SiO)ₓSiR¹₃, and
   (iii) R¹₃SiO(RR¹SiO)_{y}SiR¹₃,
   wherein R is independently selected from monovalent hydrocarbon or halohydrocarbon radicals, free of aliphatic unsaturation and having from 1 to 20 carbon atoms, R¹ is independently selected from R or an alkenyl group, x has a value of from greater than zero to 7000 and y has a value of from greater than zero to 350 with the proviso that there is at least two alkenyl groups per molecule;
(B) an organohydrogensilicon compound;
(C) a platinum group metal catalyst;
(D) a silylated acetylenic compound having a formula selected from the group consisting of: 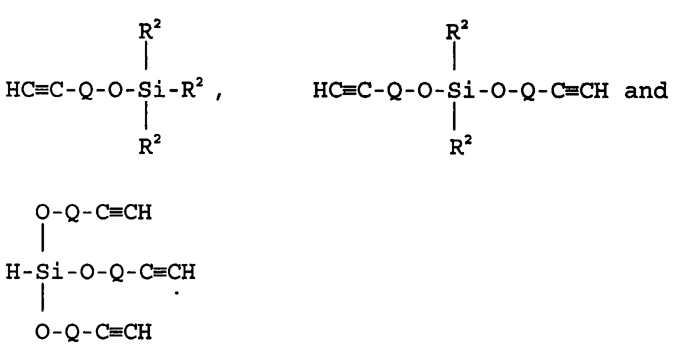 wherein R² is independently selected from the group consisting of hydrogen atom, a monovalent hydrocarbon or halohydrocarbon radicals having from 1 to 20 carbon atoms and free of aliphatic unsaturation, an alkenyl group and wherein Q is a divalent hydrocarbon radical having at least 3 carbon atoms, with the proviso that there is at most one silicon-bonded hydrogen group or one silicon-bonded alkenyl group per silylated acetylenic compound; and optionally
(E) a diluent.

In a first embodiment, the present invention is a curable silicone release coating composition wherein R¹ in the formulae for component (A) is independently selected from R and vinyl and
(D) is a silylated acetylenic compound having a formula selected from the group consisting of:

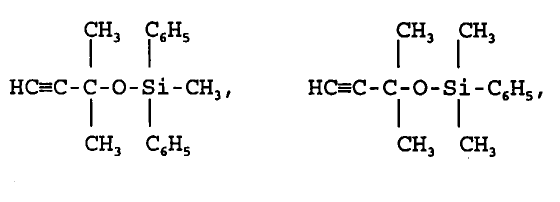

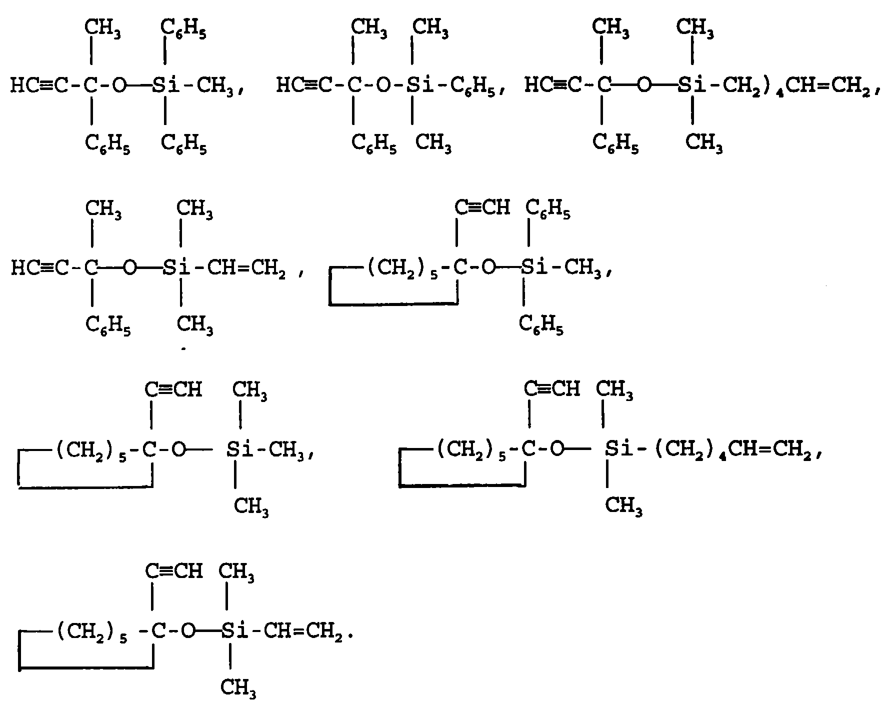

The monovalent radicals of R in compound (A) contain 1 to 20 carbon atoms and include hydrocarbon or halohydrocarbon radicals free of aliphatic unsaturation. Monovalent hydrocarbon radicals free of aliphatic unsaturation include alkyl radicals such as methyl, ethyl, propyl, butyl, hexyl, octyl and decyl; cycloaliphatic radicals such as cyclohexyl; aryl radicals such as phenyl, tolyl and xylyl; and aralkyl radicals such as benzyl or phenylethyl. Preferred R radicals are methyl and phenyl. Monovalent halohydrocarbon radicals free of aliphatic unsaturation include any monovalent hydrocarbon radical above that is free of aliphatic unsaturation and that has at least one of its hydrogen atoms replaced with a halogen, such as fluorine, chlorine or bromine. Preferred monovalent halohydrocarbon radicals have the formula CₙF₂ₙ₊₁CH₂CH₂- wherein n has a value of from 1 to 10, such as, for example, CF₃CH₂CH₂- or C₄F₉CH₂CH₂-. The several R radicals can be identical or different, as desired, and preferably at least 50 percent of all R radicals are methyl.

Component (A) is preferably selected from the group consisting of ViMe₂SiO(Me₂SiO)ₓSiMe₂Vi, Me₃SiO(Me₂SiO)ₓ(MeViSiO)_{y}SiMe₃, Me₃SiO(MeViSiO)_{y}SiMe₃, ViMe₂SiO(Me₂SiO)ₓ(MeViSiO)_{y}SiMe₂Vi and ViMe₂SiO(MeViSiO)_{y}SiMe₂Vi wherein Me and Vi represent, and hereafter denote, methyl and vinyl, respectively, and x has a value of from greater than zero to 7000 and y has a value of from greater than zero to 350. The value of subscripts x and y are such that the organopolysiloxane compound of Component (A) has a viscosity at 25°C. of at least 25 mPa·s. Preferably, x has a value of from 10 to 200 and y has a value of from 1 to 10.

The vinyl-functional organopolysiloxanes of Component (A) are well known in the art and many of these are available commercially. Thus, further description thereof is considered unnecessary.

Component (B) is an organohydrogensilicon compound. Preferably, it is an organohydrogensilicon compound that is free of aliphatic unsaturation and contains two or more silicon atoms linked by divalent radicals, an average of from one to two silicon-bonded monovalent radicals per silicon atom and an average of at least one, and preferably more, silicon-bonded hydrogen atoms per compound. Thus, the organohydrogensiloxane (B) may contain an average of two or more silicon-bonded hydrogen atoms, such as 5, 10, 20, 40, 70, 100 or more. The organohydrogen-siloxane compounds suitable as Component (B) can be linear, branched, cyclic and any combinations thereof.

Examples of suitable organopolysiloxanes as Component (B) include HMe₂SiO(Me₂SiO)_{c}SiMe₂H, (HMe₂SiO)₄Si, cyclo-(MeHSiO)_{c}, (CF₃CH₂CH₂)MeHSiO{Me(CF₃CH₂CH₂)SiO}_{c}SiHMe(CH₂CH₂CF₃), Me₃SiO(MeHSiO)_{c}SiMe₃, HMe₂SiO(Me₂SiO)_{0.5c}(MeHSiO)_{0.5c}SiMe₂H, HMe₂SiO(Me₂SiO)_{0.5c}(MePhSiO)_{0.1c}(MeHSiO)_{0.4c}SiMe₂H, Me₃SiO(Me₂SiO)_{0.3c}(MeHSiO)_{0.7c}SiMe₃ and MeSi(OSiMe₂H)₃ where c has a value of from 0 to 1000.

Especially preferred as Component (B) are methylhydrogensiloxanes selected from the group consisting of bis(trimethylsiloxy)dimethyldihydrogendisiloxane, heptamethylhydrogentrisiloxane, hexamethyldi-hydrogentrisiloxane, methylhydrogencyclosiloxanes, pentamethylpentahydrogencyclopentasiloxane, pentamethylhydrogendisiloxane, polymethylhydrogensiloxanes, tetramethyltetrahydrogencyclotetrasiloxane, tetramethyldihydrogendisiloxane and methylhydrogensiloxane-dimethylsiloxane copolymers. Preferred organohydrogenpolysiloxanes are produced from the disclosure of US Patent 4,154,714.

It is particularly preferred that Component (B) is a compound having its formula selected from the group consisting of HMe₂SiO(Me₂SiO)ₐ(MeHSiO)_{b}SiMe₂H, HMe₂SiO(Me₂SiO)ₐSiMe₂H, Me₃SiO(Me₂SiO)ₐ(MeHSiO)_{b}SiMe₃, HMe₂SiO(MeHSiO)_{b}SiMe₂H and Me₃SiO(MeHSiO)_{b}SiMe₃ wherein a has a value of from greater than zero to 1000 and b has a value of from greater than zero to 200.

The organohydrogensiloxanes of Component (B) are well known in the art, many of these being available commercially; so further description thereof is considered unnecessary.

Generally, from 0.5 to 90 parts by weight of Component (B) are used and preferably from 1 to 10 parts by weight of Component (B) are employed, per 100 parts by weight of Component (A).

Component (C) is any platinum group metal catalyst which facilitates the reaction of silicon-bonded hydrogen atoms of Component (B) with silicon-bonded vinyl radicals of Component (A). By "platinum group", we mean ruthenium, rhodium, palladium, osmium, iridium and platinum.

Component (C) is preferably a platinum-containing catalyst since they are the most widely used and available. Furthermore, they provide a more desirable effect for the compositions of this invention in terms of improved release force. Platinum-containing catalysts can be a compound or complex of any platinum group metal. A preferred platinum-containing catalyst in this invention is chloroplatinic acid, either as the commonly available hexahydrate form or as the anhydrous form, as taught in US Patent 2,823,218. A particularly useful catalyst is the composition obtained when chloroplatinic acid is reacted with an aliphatically unsaturated organosilicon compound, such as divinyltetramethyldisiloxane, as disclosed by US Patent 3,419,593, because of its easy dispersibility in organosilicon systems.

The platinum catalysts of Component (C) are well known in the art, many of these being available commercially; so further description thereof is considered unnecessary.

The amount of platinum group metal catalyst used is not narrowly limited, as long as there is a sufficient amount to accelerate a room temperature reaction between the silicon-bonded hydrogen atoms of Component (B) and the silicon-bonded vinyl radicals of Component (A). Moreover, said amount is also limited to make the use of an inhibitor possible. The exact amount of catalyst will depend on the particular catalyst utilized and is not easily predictable. However, for platinum containing catalysts, the amount can be as low as one part by weight of platinum group metal for every one million parts by weight of Component (A). Component (C) is preferably added at an amount of 10 to 10,000 parts of said platinum group metal for every one million parts of (A). It is highly preferred that said amount is at 50 to 250 parts by weight of platinum group metal for every one million parts by weight of (A).

Component (D) of our first embodiment is one of those specifically delineated silylated acetylenic inhibitors described above. They are prepared by reacting chlorosilanes with acetylenic alcohols in the presence of an acid receptor such as picoline or pyridine.

The amount of inhibitor depends on the type of inhibitor used and also depends on the type and amount of platinum group metal catalyst (C) employed. However, it is preferred that from 0.1 to 10 parts by weight of Component (D) be used and highly preferred that from 0.5 to 5 parts of Component (D) be employed, per 100 parts by weight of Component (A).

The optional diluents (E) are aliphatic hydrocarbons such as pentane, hexane, heptane, octane and nonane; aromatic hydrocarbons such as benzene, toluene and xylene; ketones such as acetone, methylethyl ketone and methylisobutyl ketone and halogenated diluents such as fluorine-, chlorine- and bromine-substituted aliphatic or aromatic hydrocarbons such as trichloroethane, perchloro-ethylene and bromobenzene. Two or more diluents may be used together.

The amount of diluent is not critical and is readily determined by one skilled in the art. The compositions of this invention usually contain up to 10,000 parts by weight of diluent; however, it is preferred that from 500 to 2000 parts by weight be employed, per 100 parts by weight of Component (A).

Another embodiment of the present invention is a curable silicone release coating composition comprising: (A) an alkenyl functional organopolysiloxane compound having a formula selected from the group consisting of: (i) R¹₃SiO(R₂SiO)ₓ(RR¹SiO)_{y}SiR¹₃, (ii) R¹₃SiO(R₂SiO)ₓSiR¹₃, and (iii) R¹₃SiO(RR¹SiO)_{y}SiR¹₃, wherein R is independently selected from monovalent hydrocarbon or halohydrocarbon radicals free of aliphatic unsaturation and having from 1 to 20 carbon atoms, R¹ is independently selected from R or an alkenyl group having at least four carbon atoms, x has a value of from greater than zero to 7000 and y has a value of from greater than zero to 350 with the proviso that there are at least two alkenyl groups having at least 4 carbon atoms per molecule; (B) an organohydrogensilicon compound; (C) a platinum group metal catalyst; (D) a silylated acetylenic compound having a formula selected from the group consisting of: 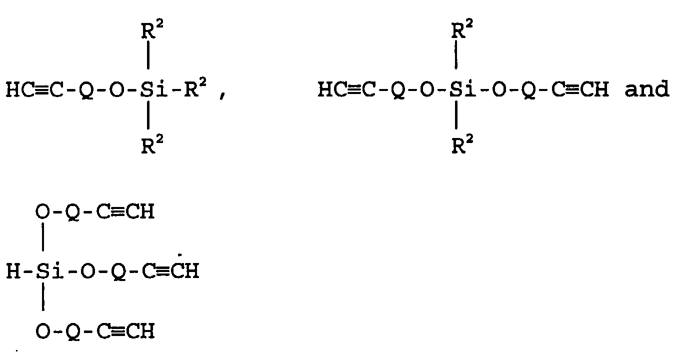 wherein R² is independently selected from the group consisting of hydrogen atom, monovalent hydrocarbon or halohydrocarbon radicals having from 1 to 20 carbon atoms and free of aliphatic unsaturation, an alkenyl group and wherein Q is a divalent hydrocarbon radical having at least 3 carbon atoms, with the proviso that there is at most one silicon-bonded hydrogen group or one silicon-bonded alkenyl group per silylated acetylenic compound, and optionally (E) a diluent.

The monovalent hydrocarbon or halohydrocarbon radicals which are free of aliphatic unsaturation of R in Component (A) are as described above in our first embodiment, including the preferred embodiments thereof. It is particularly preferred that R is methyl or phenyl.

The group R¹ of Component (A) of the second embodiment is preferably independently selected from methyl or an alkenyl group having the formula -(CH₂)ₘCH=CH₂ and -(CH₂)ₙCH=CH-(CH₂)ₚCH=CH₂ wherein m has a value of 2 to 20, n has a value of 0 to 9 and p has a value of 3, 4 or 5. It is highly preferred that R¹ is independently selected from the group consisting of methyl, 3-butenyl, 4-pentenyl, 5-hexenyl, 6-heptenyl, 7-octenyl, 8-nonenyl, 9-decenyl, 10-undecenyl, 4,7-octadienyl, 5,8-nonadienyl, 5,9-decadienyl, 6,11-dodecadienyl and 4,8-nonadienyl. US Patent 4,609,574 shows even more preferred alkenyl functional organopolysiloxanes having larger amounts of carbon atoms.

It is highly preferred that Component (A) for the second embodiment is an organopolysiloxane compound having its formula selected from the group consisting of HexMe₂SiO(Me₂SiO)ₓSiMe₂Hex, Me₃SiO(Me₂SiO)ₓ(MeHexSiO)_{y}SiMe₃, Me₃SiO(MeHexSiO)_{y}SiMe₃,HexMe₂SiO(Me₂SiO)ₓ(MeHexSiO)_{y}SiMe₂Hex and HexMe₂SiO(MeHexSiO)_{y}SiMe₂Hex wherein Hex represents, and hereafter denotes, 5-hexenyl, x has a value of from greater than zero to 7000 and y has a value of from greater than zero to 350.

The organohydrogensilicon compound of Component (B) is as above for the first embodiment, including preferred amounts and embodiments. It is highly preferred that Component (B) is a compound having its formula selected from the group consisting of HMe₂SiO(Me₂SiO)ₐ(MeHSiO)_{b}SiMe₂H, HMe₂SiO(Me₂SiO)ₐSiMe₂H, Me₃SiO(Me₂SiO)ₐ(MeHSiO)_{b}SiMe₃, HMe₂SiO(MeHSiO)_{b}SiMe₂H and Me₃SiO(MeHSiO)_{b}SiMe₃ wherein a has a value of from greater than zero to 1000 and b has a value of from greater than zero to 200.

The platinum group metal catalyst of Component (C) is also as above for the first embodiment, including preferred amounts and embodiments. It is highly preferred that Component (C) is selected from chloroplatinic acid or chloroplatinic acid-divinyltetramethyldisiloxane complexes.

The monovalent radicals of R² in Component (D) of the second embodiment can contain up to 20 carbon atoms and include hydrocarbon or halohydrocarbon radicals free of aliphatic unsaturation. Monovalent hydrocarbon radicals free of aliphatic unsaturation include alkyl radicals such as methyl, ethyl, propyl, butyl, hexyl, octyl and decyl; cycloaliphatic radicals such as cyclobutyl, cyclopentyl, cyclohexyl, cyclo-octyl or cycloheptyl, aryl radicals such as phenyl, tolyl and xylyl; and aralkyl radicals such as benzyl or phenylethyl. Monovalent halohydrocarbon radicals free of aliphatic unsaturation include any monovalent hydrocarbon radical above that is free of aliphatic unsaturation and has at least one of its hydrogen atoms replaced with a halogen, such as fluorine, chlorine or bromine. Preferred monovalent halohydrocarbon radicals have the formula CₙF₂ₙ₊₁CH₂CH₂- wherein the subscript n has a value of from 1 to 10, such as, CF₃CH₂CH₂- and C₄F₉CH₂CH₂-.

The alkenyl groups of R² in Component (D) of the second embodiment preferably have from 2 to 20 carbon atoms and include alkenyl groups having the formula -(CH₂)ₘCH=CH₂ or -(CH₂)ₙCH=CH-(CH₂)ₚCH=CH₂ wherein m has a value of 0 to 20, n has a value of 0 to 9 and p has a value of 3, 4 or 5. It is preferred that R² is independently selected from the group consisting of vinyl, allyl, propenyl, butenyl, pentenyl, 5-hexenyl, 6-heptenyl, 7-octenyl, 8-nonenyl, 9-decenyl, 10-undecenyl, 4,7-octadienyl, 5,8-nonadienyl, 5,9-decadienyl, 6,11-dodecadienyl and 4,8-nonadienyl. It is highly preferred that R² in Component (D) of our second embodiment is independently selected from the group consisting of hydrogen atom or methyl, ethyl, phenyl, vinyl, 5-hexenyl and - CH₂CH₂CₙF₂ₙ₊₁ groups where n has a value of 1 to 10.

The divalent hydrocarbon radicals of Q have at least 3 carbon atoms and include groups such as -CR⁴R⁵- wherein R⁴ and R⁵ are each monovalent hydrocarbon or halohydrocarbon radicals having from 1 to 20 carbon atoms, as described above for R. Preferably, R⁴ and R⁵ are independently selected from the group of radicals consisting of methyl, ethyl, propyl, butyl, isopropyl, isobutyl, hexyl and phenyl. The groups R⁴ and R⁵ together can also form cycloaliphatic radicals such as cyclobutyl, cyclopentyl, cyclohexyl, cyclooctyl or cycloheptyl. Preferably, Q is selected from the group consisting of -C(CH₃)₂-, -C(CH₃)(CH₂CH(CH₃)₂)-, -C(CH₃)(C₆H₅)- and

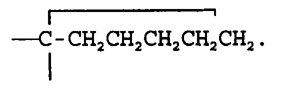

Most preferably, Component (D) of our second embodiment is a compound having its formula selected from the group consisting of

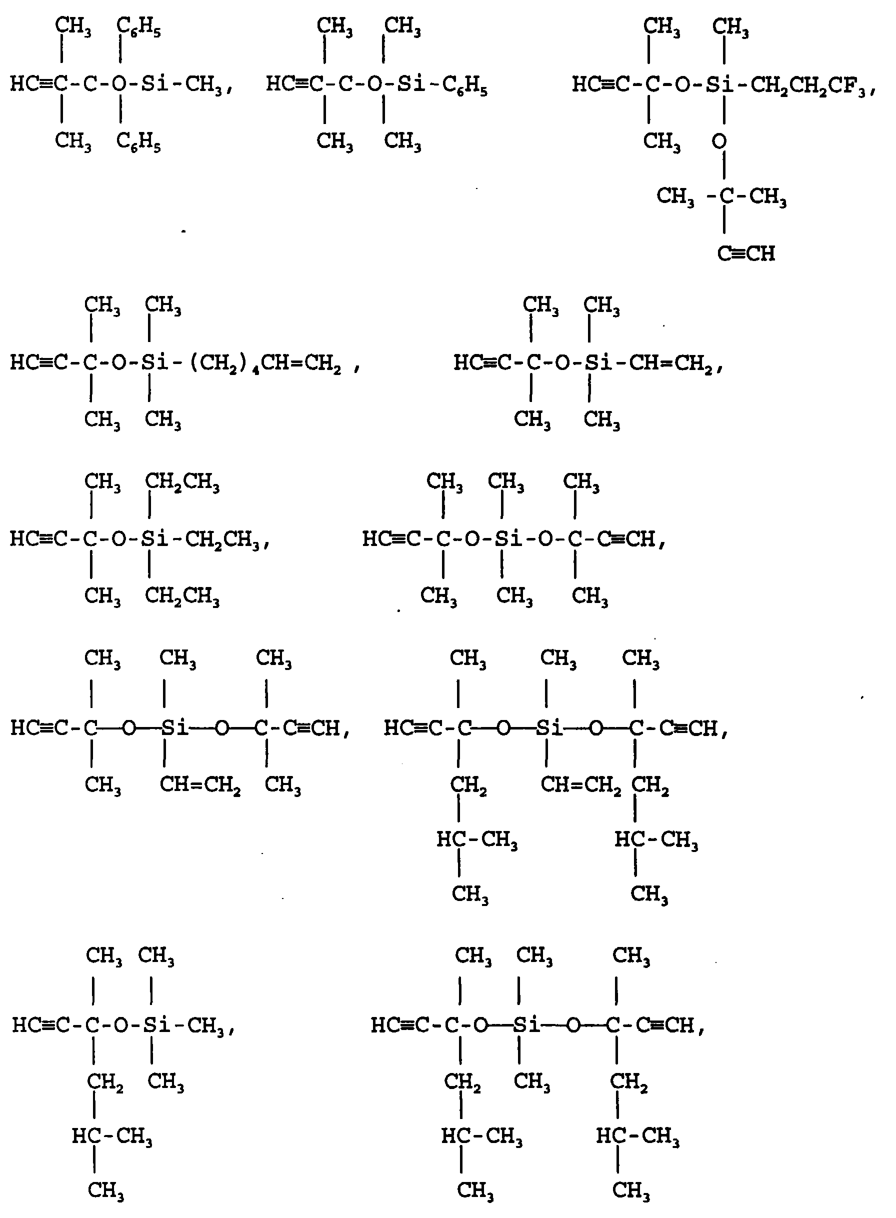

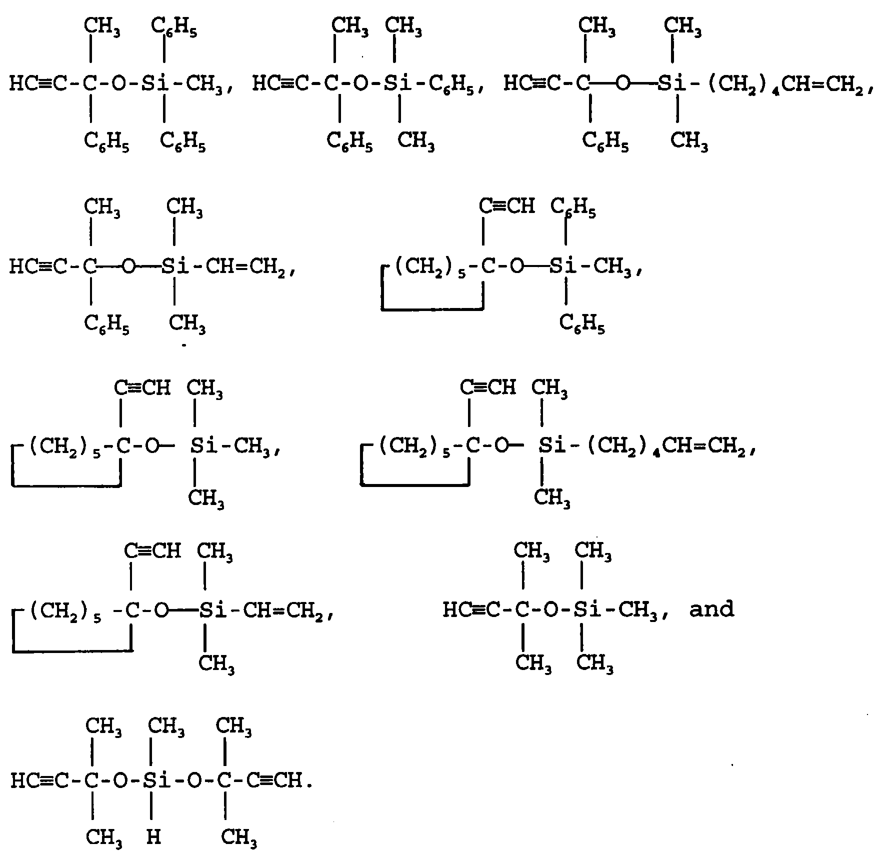

The silylated acetylenic inhibitors of Component (D) of our second embodiment are also prepared by reacting chlorosilanes with acetylenic alcohols in the presence of an acid receptor such as picoline or pyridine.

The amount of inhibitor depends on the type of inhibitor used and also depends on the type and amount of platinum group metal catalyst (C) used. It is preferred that from 0.01 to 10 parts by weight of Component (D) and more preferred that from 0.1 to 5 parts by weight be employed, per 100 parts by weight of Component (A).

The optional diluent (E) is as described above in our first embodiment, including the preferred embodiments and amounts.

The compositions of this invention are prepared by homogeneously mixing Components (A-D) and any optional components in any order, using any suitable mixing means, such as a spatula, a drum roller, a mechanical stirrer, a three-roll mill, a sigma blade mixer, a bread dough mixer and a two-roll mill. The order of mixing these components is not critical; however, it is preferred that Components (A) and (B) be mixed together in a preliminary mixing step, next adding Component (D) and then adding Component (C); or mixing together Components (A) and (C), afterward mixing (B) and (D) in a preliminary mixing step and then combining those two mixtures in a final mixing step. It is especially preferred that Components (B) and (C) be kept separate and additionally Components (C) and (D) be kept separate,
during the preparation of our silicone release coatings until the final mixing step.

The compositions of this invention may contain any optional components commonly used in platinum group metal catalyzed organosilicon compositions, such as reinforcing and extending fillers; hydrocarbons and halohydrocarbons free of aliphatic unsaturation; colorants; stabilizers; adhesion modifiers and adhesive-release. In particular, the coating compositions of this invention can further comprise the well-known high release additives of the art.

The compositions of this invention also have utility as formable compositions to provide organosilicon articles such as O-rings, tubing, wire-coatings and gaskets, encapsulant or sealant compositions and coating compositions. The compositions of this invention have particular utility as encapsulant, sealant or coating compositions, and more particularly as release coatings.

In another aspect, the present invention provides a coated article obtainable by a method comprising: (I) applying a curable silicone coating composition according to the present invention on the surface of a substrate and (II) exposing the coating and substrate to an energy source selected from (i) heat or (ii) actinic radiation to cure the coating. This method can further comprise: (III) applying a pressure sensitive adhesive on the coated substrate after step (II).

By "actinic radiation", it is meant ultraviolet light, electron beam radiation and alpha-, beta-, gamma- and x-rays. By "heat", it is meant infrared radiation, hot-air or microwave radiation. Of course, actinic radiation is frequently accompanied by heat and the use of a combination of these procedures is also feasible herein. In this method of this invention, the application of the silicone release coating composition to the substrate is readily accomplished by any suitable manner known in the art, such as by spreading, brushing, extruding, spraying, gravure, kiss-roll and air-knife.

In a preferred embodiment of this method, the solid substrate is a flexible sheet material such as paper, polyolefin film, polyolefin-coated paper or foil. Other suitable solid substrates that are coatable by the method of this invention include cellulosic materials such as wood, cardboard and cotton; metallic materials such as aluminum, copper, steel and silver; siliceous materials such as glass or stone; and synthetic polymer materials such as polyolefins, polyamides, polyesters and polyacrylates. As to solid substrate form, it can be sheet-like, such as a peelable release liner for pressure sensitive adhesive, a fabric or a foil or three-dimensional in form.

After our curable silicone release coating has been coated onto a substrate, it is heated and/or irradiated with actinic radiation to cure said coating and to adhere it to said substrate.

In a preferred embodiment, a flexible sheet material, such as paper, metal foil or tapestock, is coated with a thin coating of our curable silicone release coating, preferably in a continuous manner. Then, the coating is heated and/or irradiated to rapidly cure said coating and to provide a sheet-like material, bearing on at least one surface thereof, an adhesive-releasing coating. This adhesive-releasing coating is subsequently brought into contact with a pressure sensitive adhesive to form an article having a peelable, i.e. releasable, adhesive/coating interface. Examples of such an article include, adhesive labels having a peelable backing, adhesive tape in roll form and adhesive packaged in a strippable container. The pressure sensitive adhesive can be non-silicone-based, such as the well-known acrylic or rubber types; or it can be silicone-based, such as the peroxide-or platinum-curable polydiorganosiloxane-based adhesives.

The method of this invention is also applicable to adhesive materials, other than pressure sensitive adhesives. Examples of such materials include foods, asphalt and gum polymers.

All parts and percentages are on a weight basis and all measurements were obtained at 25°C. unless otherwise indicated.

The apparatus and testing procedures used herein are as follows:

Viscosities were measured with a rotating spindle viscometer at 25°C. (1 centistoke (cS) = 1 mm²/s).

The no migration condition was determined by firmly adhering a common, pressure sensitive adhesive tape to the coating, then removing the tape and next folding the removed tape together, with the adhesive surfaces to each other. Absence of migration of the coating to the tape was indicated by noting that the doubled tape thus produced was as difficult to separate as an unused tape which was doubled.

Cure time for a composition means the time interval required for the composition, when coated onto S2S kraft paper, at a thickness of 1.6 g/m², to attain a no migration condition.

The silicone coating compositions were tested for thin film bath life in the following manner. This test was run under typical laboratory conditions (20°C. with varying relative humidity) in a location free from significant air movement. The silicone coating was applied with a 0.005 inches (125 microns) gapped drawn-down device (i.e. a BIRD 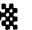 bar) onto a clean piece of 0.002 inches (0.05 mm) thick polyester film. The area of the draw-down was approximately 3 x 6 inches (7.6 x 15.2 cm). The coating was then evaluated periodically (i.e. every 5 minutes) until it was tack-free in the center (i.e. the center of the film was no longer sticky or fluid). The time (in minutes) in which this occurred was then recorded as the thin-film bath life.

The following materials were employed in preparing the compositions in the examples:

Organopolysiloxane A was a compound having the general formula ViMe₂SiO(Me₂SiO)ₐ(MeViSiO)_{b}SiMe₂Vi having 2 mole% vinyl groups, a degree of polymerization (DP) of 160 and a viscosity of 350 mm²/s, wherein Me and Vi denote, and hereafter represents, methyl and vinyl (-CH=CH₂), respectively.

Organopolysiloxane B was a compound having the general formula HexMe₂SiO(Me₂SiO)ₐ(MeHexSiO)_{b}SiMe₂Hex, having 2 mole% hexenyl groups, a DP of 100 and wherein Hex denotes, and hereafter represents, 5-hexenyl (-(CH₂)₄CH=CH₂).

Organohydrogensiloxane A was a trimethylsiloxy-endblocked-polydimethylsiloxane-methylhydrogensiloxane copolymer having an average DP of 40 and 70 mole% methylhydrogen moiety on the siloxane chain.

Catalyst A was a platinum catalyst (a soluble platinum complex containing 0.5% platinum formed from chloroplatinic acid and divinyltetramethyldisiloxane).

Inhibitor A was prepared by adding 150 grams of diphenylmethylchlorosilane and 59.9 g of picoline to a 3-neck flask equipped with a mechanical stirrer, thermometer, addition funnel, a nitrogen purge and reflux condenser. This mixture was then stirred at room temperature under a nitrogen atmosphere. Next, 54.2 g of methylbutynol were added dropwise to the flask over a 30 minute period which began a steady exotherm and a rise in temperature. After acetylenic alcohol addition was complete, the mixture was allowed to react for an additional hour at 60°C. The material was then transferred to a separatory funnel and was water washed. The product layer was decanted to a bottle, excess NaSO₄ was added to remove any residual water and the material was afterward filtered. The product layer was transferred to a flask and a distillation was performed to purify the product. ¹H and ¹³C NMR confirmed this compound to be a compound having the formula 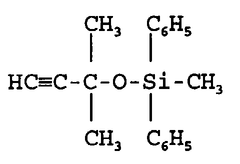 (diphenylmethyl(3-methyl-1-butyn-3-oxy)silane).

Inhibitor B was prepared in the same manner as Inhibitor A, except that 202 g of dimethylphenylchlorosilane, 136 g of picoline and 101 g of methylbutynol were employed in the reaction. ¹H and ¹³C NMR confirmed this compound to be a compound having the formula 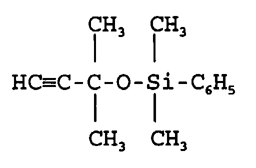 (dimethylphenyl(3-methyl-1-butyn-3-oxy)silane).

Inhibitor C was prepared in the same manner as Inhibitor A, except that 197 g of dimethylhexenylchlorosilane, 107 g of picoline and 97 g of methylbutynol were employed in the reaction. ¹H and ¹³C NMR confirmed this compound to be a compound having the formula 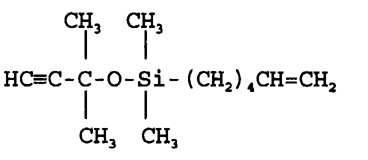 (dimethylhexenyl(3-methyl-1-butyn-3-oxy)silane).

Inhibitor D was prepared in the same manner as Inhibitor A, except that 200 g of dimethylvinylchlorosilane, 163 g of picoline and 135 g of methylbutynol were employed in the reaction. ¹H and ¹³C NMR confirmed this compound to be a compound having the formula 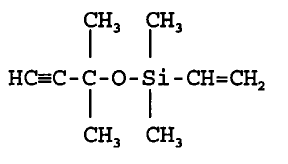 (dimethylvinyl(3-methyl-1-butyn-3-oxy)silane.

Inhibitor E was prepared in the same manner as Inhibitor A, except that 101.5 g of triethylchlorosilane, 63 g of picoline and 58 g of methylbutynol were employed in the reaction. ¹H and ¹³C NMR confirmed this compound to be a compound having the formula 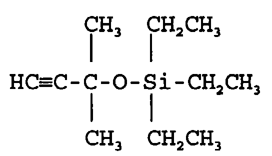 (triethyl(3-methyl-1-butyn-3-oxy)silane).

Inhibitor F was prepared in the same manner as Inhibitor A, except that 200 g of methyltrifluoropropyldichlorosilane, 177 g of picoline and 160 g of methylbutynol were employed in the reaction. ¹H and ¹³C NMR confirmed this compound to be a compound having the formula 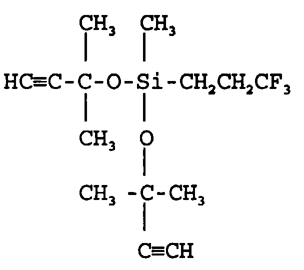 (methyltrifluoropropyl bis(3-methyl-1-butyn-3-oxy)silane).

Inhibitor G was prepared in the same manner as Inhibitor A, except that 221 g of methylbutynol and 245 g of picoline were added to the flask first and then this was followed by the dropwise addition of 168 g of dimethyldichlorosilane. This compound was determined to be a compound having the formula 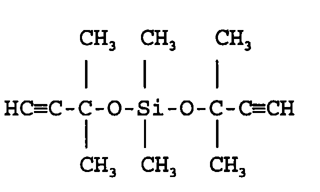 (dimethyl bis(3-methyl-1-butyn-3-oxy)silane).

Inhibitor H was prepared in the same manner as Inhibitor A, except that 171.1 g of trimethylchlorosilane, 147.4 g of picoline and 200 g of 3,5-dimethyl-1-hexyn-3-ol were employed in the reaction. This compound was determined to be a compound having the formula 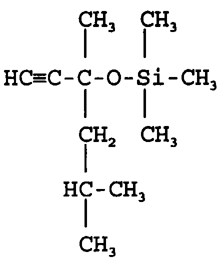 (trimethyl(3,5-dimethyl-1-hexyn-3-oxy)silane).

Inhibitor I was prepared in the same manner as Inhibitor A, except that 295.3 g of 3,5-dimethyl-1-hexyn-3-ol and 196.7 g of pyridine were added to the flask first and then this was followed by the dropwise addition of 150 g of dimethyldichlorosilane. This compound was determined to be a compound having the formula 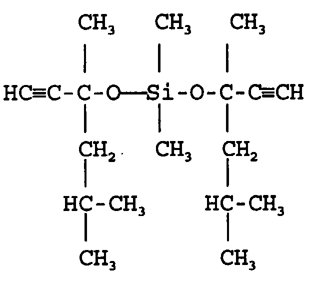 (dimethyl bis(3,5-dimethyl-1-hexyn-3-oxy)silane).

Inhibitor J was prepared in the same manner as Inhibitor A, except that 149.5 g of methyldiphenylchlorosilane, 60.5 g of picoline and 93 g of phenylbutynol, were employed in the reaction. As phenylbutynol is solid at room temperature, a heat gun was used to keep it liquid during the addition phase. This compound was determined to be a compound having the formula 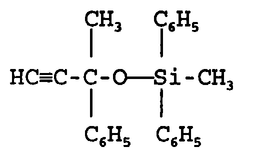 (diphenylmethyl(3-phenyl-1-butyn-3-oxy)silane).

Inhibitor K was prepared in the same manner as Inhibitor A, except that 113.3 g of dimethylphenylchlorosilane, 79.5 g of picoline and 96.8 g of phenylbutynol, were employed in the reaction. A heat gun was again used to keep the phenylbutynol liquid during the addition phase. ¹H and ¹³C NMR confirmed this compound to be a compound having the formula 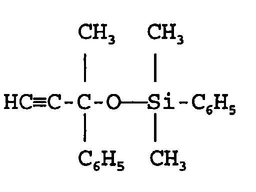 (dimethylphenyl(3-phenyl-1-butyn-3-oxy)silane).

Inhibitor L was prepared in the same manner as Inhibitor A, except that 120 g of dimethylhexenylchlorosilane, 65 g of picoline and 98.5 g of phenylbutynol, were employed in the reaction. A heat gun was again used to keep the phenylbutynol liquid during the addition phase. ¹H and ¹³C NMR confirmed this compound to be a compound having the formula 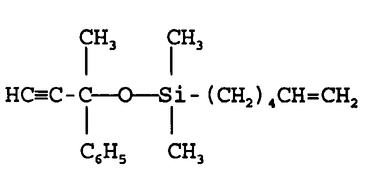 (dimethylhexenyl(3-phenyl-1-butyn-3-oxy)silane).

Inhibitor M was prepared in the same manner as Inhibitor A, except that 80 g of dimethylvinylchlorosilane, 65 g of picoline and 95 g of phenylbutynol, were employed in the reaction. A heat gun was again used to keep the phenylbutynol liquid during the addition phase. ¹H and ¹³C NMR confirmed this compound to be a compound having the formula 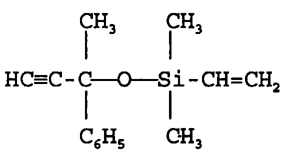 (dimethylvinyl(3-phenyl-1-butyn-3-oxy)silane).

Inhibitor N was prepared in the same manner as Inhibitor A, except that 188 g of diphenylmethylchloro-silane, 80 g of picoline and 96.8 g of ethynylcyclohexanol, were employed in the reaction. ¹H and ¹³C NMR confirmed this compound to be a compound having the formula 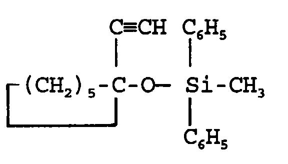 (diphenylmethyl(cyclohexyl-1-ethyn-1-oxy)silane).

Inhibitor O was prepared in the same manner as Inhibitor A, except that 138.5 g of dimethylhexenylchlorosilane, 87 g of picoline and 96.3 g of ethynylcyclohexanol, were employed in the reaction. ¹H and ¹³C NMR confirmed this compound to be a compound having the formula 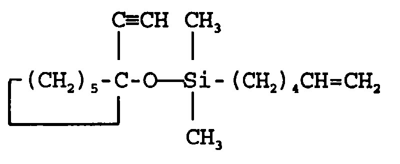 (dimethylhexenyl(cyclohexyl-1-ethyn-1-oxy)silane).

Inhibitor P was prepared in the same manner as Inhibitor A, except that 97 g of dimethylvinylchlorosilane, 76 g of picoline and 96.8 g of ethynylcyclohexanol, were employed in the reaction. ¹H and ¹³C NMR confirmed this compound to be a compound having the formula 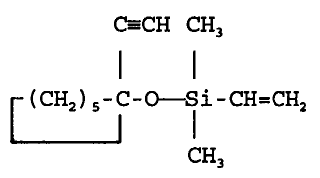 (dimethylvinyl(cyclohexyl-1-ethyn-1-oxy)silane).

Inhibitor Q was a compound having the formula 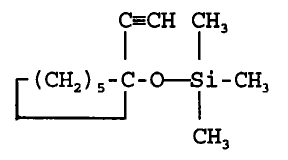 (trimethyl(cyclohexyl-1-ethyn-1-oxy)silane).

Inhibitor R was a compound having the formula

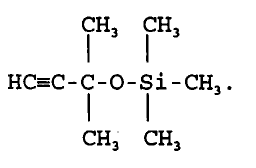

Inhibitor S was a compound having the formula 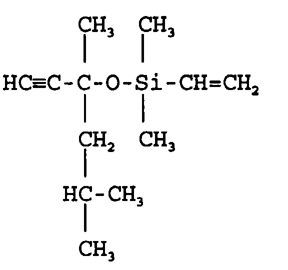 (dimethylvinyl(3,5-dimethyl-1-hexyn-3-oxy)silane).

Inhibitor T was a compound having the formula 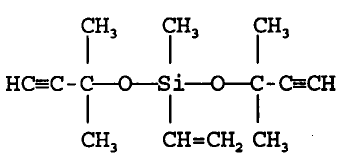 (vinylmethyl bis(3-methyl-1-butyn-3-oxy)silane).

Inhibitor U was a compound having the formula 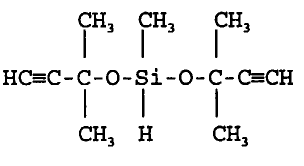 (methylhydrogen bis(3-methyl-1-butyn-3-oxy)silane).

Comparative Inhibitor (C.I.) A was 3,5-dimethyl-1-hexyn-3-ol.

### Examples 1-13

A silicone release coating was prepared by mixing 382.2 g of Organopolysiloxane B and 17 g of Organohydrogensiloxane A in a 118.3 ml (4 ounce) jar. Next, to 5 g of this mixture were added one of the above inhibitors and the resulting mixture was stirred until it was homogeneous. The type and amount of inhibitor added in grams is delineated in Table 1. Finally, with stirring, 0.1 g of Catalyst A was added to this mixture. The resulting mixture was then stirred until it was homogeneous. The resulting silicone coatings were tested for cure time in seconds to no migration at 82.2°C. (180°F.) and for thin film bath life (TFBL). The results are given in Table I.

**Table 1**

| Example | Inhibitor | Inhibitor Amount (g) | Cure Time (sec.) | TFBL (min.) |
|---|---|---|---|---|
| 1 | (C.I.) A | 0.0286 | 14.4 | 18 |
| 2 | A | 0.0430 | 36.0 | 1080 |
| 3 | B | 0.0357 | 6.5 | >150 |
| 4 | C | 0.0341 | 8.0 | >120 |
| 5 | D | 0.0280 | 4.2 | 14 |
| 6 | E | 0.0333 | 3.8 | >90 |
| 7 | F | 0.0274 | 14.4 | >60 |
| 8 | K | 0.0462 | 24.0 | 300 |
| 9 | L | 0.0437 | 36.0 | 246 |
| 10 | M | 0.0283 | 18.0 | 366 |
| 11 | N | 0.0506 | >36 | 354 |
| 12 | O | 0.0485 | 24.0 | 168 |
| 13 | P | 0.0328 | 8.0 | 150 |

### Examples 14-26

A silicone release coating was prepared by mixing 382.2 g of Organopolysiloxane B and 17 g of Organohydrogensiloxane A in a 118.3 ml (4 ounce) jar. Next, to 5 g of this mixture were added one of the above inhibitors and the resulting mixture was stirred until it was homogeneous. The type and amount of inhibitor added in grams is delineated in Table 2. Finally, with stirring, 0.1 grams of Catalyst A was added to this mixture. The resulting mixture was then stirred until it was homogeneous. The resulting silicone coatings were tested for cure time in seconds to no migration at 110°C. (230°F.) as delineated above. The results are reported in Table 2.

**Table 2**

| Example | Inhibitor | Inhibitor Amount g | Cure Time (sec.) |
|---|---|---|---|
| 14 | (C.I.) A | 0.0191 | 5.1 |
| 15 | A | 0.0435 | 10.3 |
| 16 | B | 0.0328 | 3.0 |
| 17 | C | 0.0350 | 2.5 |
| 18 | D | 0.0250 | 1.6 |
| 19 | E | 0.0336 | 1.8 |
| 20 | F | 0.0221 | 4.2 |
| 21 | K | 0.0438 | 6.5 |
| 22 | L | 0.0443 | 7.2 |
| 23 | M | 0.0246 | 4.8 |
| 24 | N | 0.0496 | 14.4 |
| 25 | O | 0.0409 | 3.8 |
| 26 | P | 0.0319 | 2.4 |

### Examples 27-39

A silicone release coating was prepared by mixing 382.2 g of Organopolysiloxane B and 17 g of Organohydrogensiloxane A in a 118.3 ml (4 ounce) jar. Next, to 100 g of this mixture were added one of the above inhibitors and the resulting mixture was stirred until it was homogeneous. The type and amount of inhibitor added in grams is delineated in Table 3. Finally, with stirring, 0.1 g of Catalyst A was added to this mixture. The resulting mixture was then stirred until it was homogeneous. The viscosity of the resulting silicone coatings was then measured on a rotating spindle viscometer on an hourly basis. The viscosity is reported in mPa·s (1 mPa·s = 1 centipoise) and was measured at 40°C. Viscosity values which reached 0.5 or above were rounded to the next highest whole number. The results are enumerated in Table 3.

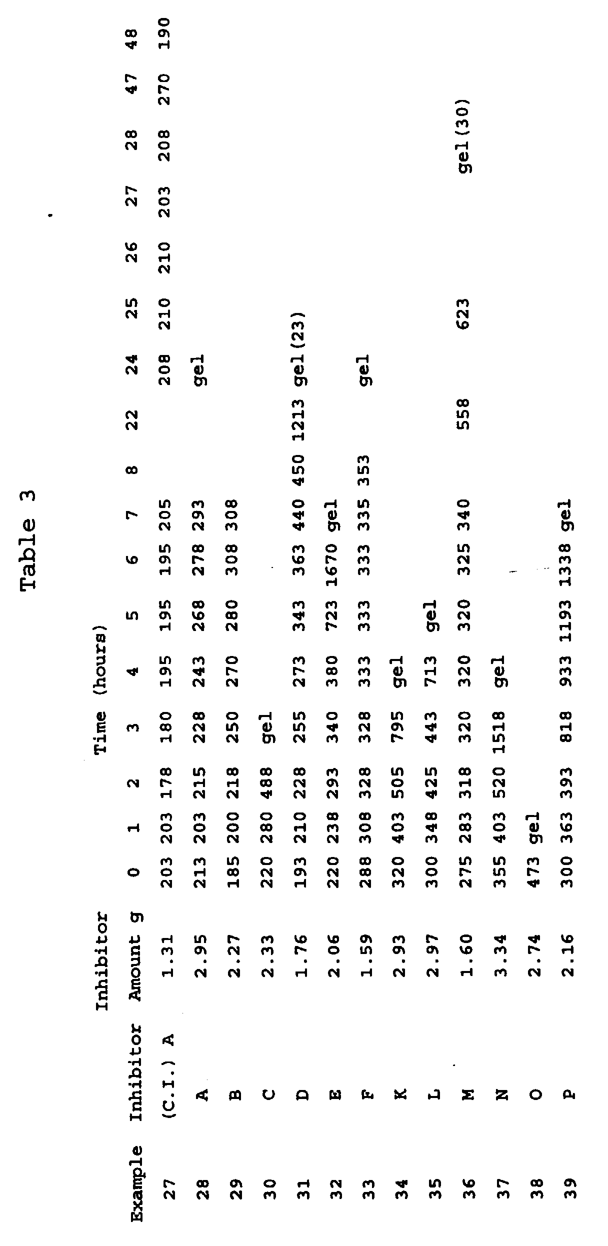

### Examples 40-42

Silicone release coatings were prepared by mixing 10 g of Organopolysiloxane B and 0.45 g of Organohydrogensiloxane A in a 118.3 ml (4 ounce) jar. Next, to this mixture was added one of the above inhibitors and the resulting mixture was stirred until it was homogeneous. The type and amount of inhibitor added in grams is delineated in Table 4. Finally, with stirring, 0.19 g of Catalyst A was added to this mixture. The resulting mixture was then stirred until it was homogeneous. The resulting silicone coatings were tested for cure temperature at a 10 second dwell time. The coatings were cured to no migration as above. The temperature at which the silicone coatings cured is listed in Table 4.

A comparison silicone coating (1) was prepared by mixing 10 g of Organopolysiloxane B, 0.095 g of diethyl fumarate, 0.04 g of benzyl alcohol and 0.19 g of Catalyst A in a 118.3 ml (4 ounce) jar. Next, 0.45 g of Organohydrogensiloxane A was added to this mixture and the mixture was stirred until it was homogeneous.

A second comparison silicone coating (2) was prepared by mixing 10 g of Organopolysiloxane B, 0.08 g of bis(2-methoxy-1-methylethyl) maleate and 0.19 g of Catalyst A in a 118.3 ml (4 ounce) jar. Next, 0.45 g of Organohydrogensiloxane A was added to this mixture and the mixture was stirred until it was homogeneous. Both of these comparison compositions were then tested for cure temperature at a 10 second dwell time. The coatings were cured to no migration as above. The temperature at which the comparison coatings cured is also provided in Table 4.

**Table 4**

| Example | Inhibitor | Inhibitor Amount g | Cure Temp. (°C.) |
|---|---|---|---|
| 40 | (C.I.) A | 0.03 | 104.4 |
| 41 | E | 0.20 | 71.1 |
| 42 | R | 0.20 | 73.9 |

| Compar. Coating | | | |
|---|---|---|---|
| (1) | | | 82.2 |
| (2) | | | 126.7 |

### Examples 43-46

Silicone release coatings were prepared by mixing 97.29 g of Organopolysiloxane B and 4.57 g of Organohydrogensiloxane A in a 118.3 ml (4 ounce) jar. Next, to this mixture was added one of the above inhibitors and the resulting mixture was stirred until it was homogeneous. The type and amount of inhibitor added in grams is delineated in Table 5. Finally, with stirring, 1.9 g of Catalyst A were added to this mixture. The resulting mixture was stirred until it was homogeneous. The resulting silicone coatings were tested for cure temperature at a 10 second dwell time. The coatings were cured to no migration as above. The temperature at which the silicone coatings cured is shown in Table 5.

**Table 5**

| Example | Inhibitor | Inhibitor Amount g | Cure Temp. (°C.) |
|---|---|---|---|
| 43 | H | 2.5 | 71.1 |
| 44 | S | 2.7 | 76.7 |
| 45 | G | 0.15 | 87.8 |
| 46 | T | 0.3 | 82.2 |

### Example 47

Silicone release coatings were prepared by mixing 100 g of Organopolysiloxane B and 4.36 g of Organohydrogensiloxane A in a 118.3 ml (4 ounce) jar. Next, to this mixture was added varying amounts of inhibitor H and the resulting mixture was stirred until it was homogeneous. The amount of inhibitor H added in grams is delineated in Table 6. Finally, with stirring, 1.9 g of Catalyst A were added to this mixture. The resulting mixture was then stirred until it was homogeneous. The resulting silicone coatings were then tested for cure time in seconds to no migration at 82.2°C (180°F), thin film bath life (TFBL), viscosity and cure temperature at a 10 second dwell time as described above. The results of the tests are shown in Table 6.

**Table 6**

| Example | Inhibitor H Amount g | Time/viscosity at 40°C (hr)/(mPa·s) | | TFBL (min.) | Cure Time (sec.) | Cure Temp. (°C.) |
|---|---|---|---|---|---|---|
| 47A | 0.4 | 0 | gel | 25 | --- | --- |
| 47B | 1.0 | 0 | 360 | 55 | 6.5 | 65.6 |
| | | 1 | gel | | | |
| 47C | 2.0 | 0 | 260 | 70 | 7.2 | 68.3 |
| | | 1 | 375 | | | |
| | | 2 | gel | | | |
| 47D | 3.0 | 0 | 217 | 80 | 8.0 | --- |
| | | 1 | 287 | | | |
| | | 2 | 395 | | | |
| | | 3 | 565 | | | |
| | | 4 | 1900 | | | |

### Examples 48-53

A silicone release coating was prepared by mixing 97.29 g of Organopolysiloxane B and 4.57 g of Organohydrogensiloxane A in a 118.3 ml (4 ounce) jar. Next, to this mixture was added one of the above inhibitors and the resulting mixture was stirred until it was homogeneous. The type and amount of inhibitor added in grams is delineated in Table 7. Finally, with stirring, 1.9 g of Catalyst A were added to this mixture. The resulting mixture was then stirred until it was homogeneous. The resulting silicone coatings were tested for cure time in seconds to no migration at 82.2°C. (180°F.) and thin film bath life (TFBL). The results are provided in Table 7.

**Table 7**

| Example | Inhibitor | Inhibitor Amount g | Cure Time (sec) | TFBL (min) |
|---|---|---|---|---|
| 48 | G | 0.15 | 9.0 | 105 |
| 49 | H | 2.5 | 4.2 | 37 |
| 50 | T | 0.3 | 10.3 | >120 |
| 51 | E | 2.5 | 6.5 | 102 |
| 52 | R | 2.0 | 4.8 | 16 |

### Examples 53-56

A silicone release coating was prepared by mixing 97.29 g of Organopolysiloxane B and 4.57 g of Organohydrogensiloxane A in a 118.3 ml (4 ounce) jar. Next, to this mixture was added one of the above inhibitors and the resulting mixture was stirred until it was homogeneous. The type and amount of inhibitor added in grams is delineated in Table 8. Finally, with stirring, 1.9 g of Catalyst A were added to this mixture. The resulting mixture was then stirred until it was homogeneous. The viscosity of the resulting silicone coatings was measured as above. The results are given in Table 8.

**Table 8**

| Example | Inhibitor | Inhibitor Amount g | Time (hours) | | | |
|---|---|---|---|---|---|---|
| | | | 0 | 1 | 2 | 3 |
| 53 | H | 2.50 | 215 | 593 | 1898 | gel |
| 54 | G | 0.15 | 245 | 348 | 660 | gel |
| 55 | T | 0.30 | 233 | 643 | gel | |
| 56 | R | 2.00 | 195 | 297 | 523 | gel |

### Example 57

Silicone release coatings were prepared by mixing 97.29 g of Organopolysiloxane B and 4.57 g of Organohydrogensiloxane A in a 118.3 ml (4 ounce) jar. Next, to this mixture was added varying amounts of inhibitor U and the resulting mixture was stirred until it was homogeneous. The amount of inhibitor U added in grams is delineated in Table 9. Finally, with stirring, 1.9 g of Catalyst A was added to this mixture. The resulting mixture was then stirred until it was homogeneous. The resulting silicone coatings were tested for cure time in seconds to no migration at 82.2°C. (180°F.), thin film bath life (TFBL) and viscosity. The results of the tests are enumerated in Table 9.

**Table 9**

| Example | Inhibitor U Amount g | Time/viscosity at 40°C (hr)/(mPa·s) | | TFBL (min.) | Cure Time (sec.) |
|---|---|---|---|---|---|
| 57A | 0.15 | 0 | gel | 60 | 9.0 |
| 57B | 0.30 | 2 | gel | 130 | 18.0 |
| 57C | 0.45 | 0 | 210 | 160 | 24.0 |
| | | 1 | 285 | | |
| | | 2 | gel | | |

### Example 58

A silicone release coating was prepared by mixing 20 g of Organopolysiloxane B and 1.14 g of Organohydrogensiloxane A in a 118.3 ml (4 ounce) jar. Next, to this mixture was added 0.24 g of inhibitor Q and the resulting mixture was stirred until it was homogeneous. Finally, with stirring, 0.38 g of Catalyst A was added to this mixture. The resulting mixture was then stirred until it was homogeneous. The resulting silicone coating was then tested for cure time in seconds to no migration at 82.2°C. (180°F.). The cure time of this silicone release coating was 9.0 seconds.

### Example 59

A silicone release coating of the invention was prepared by mixing 10 g of Organopolysiloxane B and 0.57 g of Organohydrogensiloxane A in a 118.3 ml (4 ounce) jar. Next, to this mixture was added 0.12 g of inhibitor H and the resulting mixture was stirred until it was homogeneous. Finally, with stirring, 0.19 g of Catalyst A was added to this mixture. The resulting mixture was then stirred until it was homogeneous. The resulting silicone coating was tested for cure temperature at a 10 second dwell time. The coating was cured to no migration. The temperature at which the silicone coating cured is listed in Table 10.

A comparison silicone release coating was prepared by mixing 10 g of Organopolysiloxane A and 0.61 g of Organohydrogensiloxane A in a 118.3 (4 ounce) jar. Next, to this mixture was added 0.12 g of inhibitor H and the resulting mixture was stirred until it was homogeneous. Finally, with stirring, 0.19 g of Catalyst A was added to this mixture. The resulting mixture was then stirred until it was homogeneous. The resulting comparison silicone coating was tested for cure temperature at a 10 second dwell time. The coating was cured to no migration as delineated above. The temperature at which the silicone coating cured is reported in Table 10.

**Table 10**

| | Cure Temp. (°C) |
|---|---|
| Example 59 | 65.6 |
| Compar. Ex. | 107.2 |

Thus, from the above data, it is clear that silicone release coatings containing organopolysiloxanes having higher alkenyl groups (organopolysiloxane B) in combination with our silylated inhibitors cure at far lower temperatures than do silicone release coatings containing organopolysiloxanes having vinyl groups (Organopolysiloxane A) in combination with silylated inhibitors.

## Claims

1. A curable silicone release coating composition comprising:
(A) an alkenyl functional organopolysiloxane compound having a formula selected from the group consisting of:
(i) R¹₃SiO(R₂SiO)ₓ(RR¹SiO)_{y}SiR¹₃,
(ii) R¹₃SiO(R₂SiO)ₓSiR¹₃, and
(iii) R¹₃SiO(RR¹SiO)_{y}SiR¹₃,
wherein R is independently selected from monovalent hydrocarbon or halohydrocarbon radicals, free of aliphatic unsaturation and having from 1 to 20 carbon atoms, R¹ is independently selected from R or an alkenyl group, x has a value of from greater than zero to 7000 and y has a value of from greater than zero to 350 with the proviso that there is at least two alkenyl groups per molecule;
(B) an organohydrogensilicon compound;
(C) a platinum group metal catalyst;
(D) a silylated acetylenic compound having a formula selected from the group consisting of: 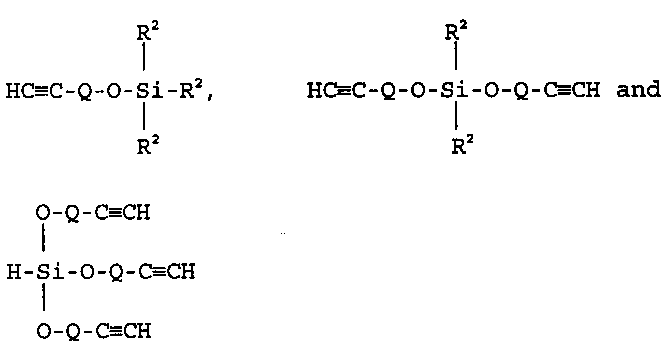 wherein R² is independently selected from the group consisting of hydrogen atom, a monovalent hydrocarbon or halohydrocarbon radicals having from 1 to 20 carbon atoms and free of aliphatic unsaturation, an alkenyl group and wherein Q is a divalent hydrocarbon radical having at least 3 carbon atoms, with the proviso that there is at most one silicon-bonded hydrogen group or one silicon-bonded alkenyl group per silylated acetylenic compound; and optionally
(E) a diluent.

2. The coating composition of claim 1, wherein R¹ in the formulae for component (A) is independently selected from R and vinyl and
(D) is a silylated acetylenic compound having a formula selected from the group consisting of:

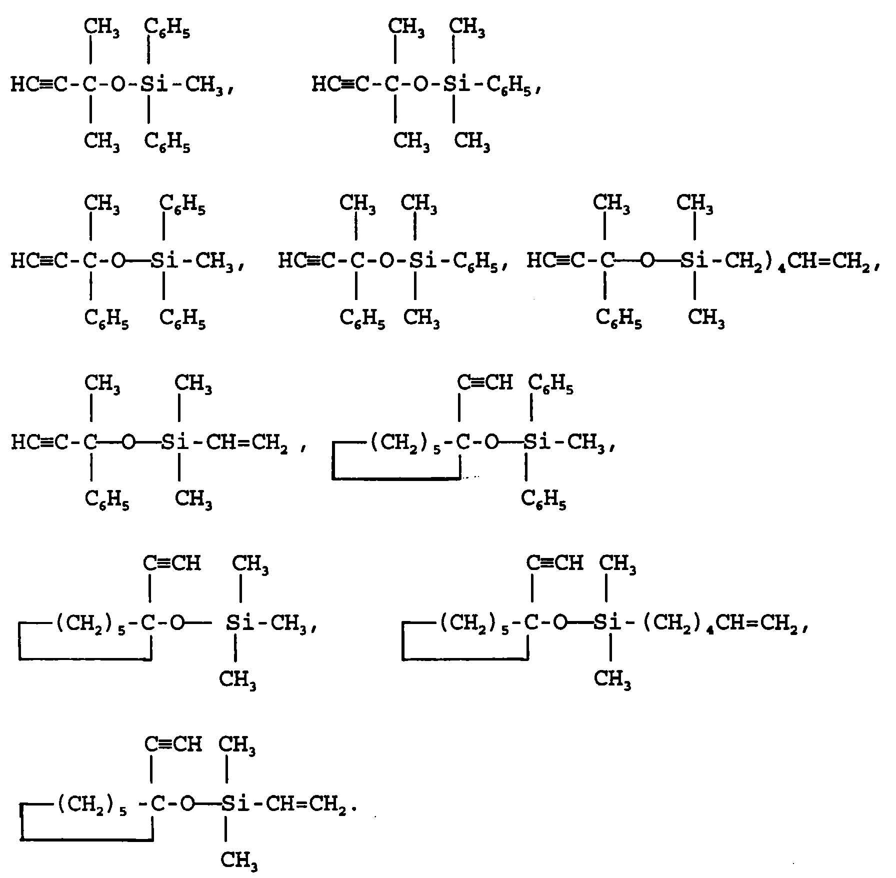

3. The coating composition of claim 2, wherein (A) is selected from the group consisting of ViMe₂SiO(Me₂SiO)ₓSiMe₂Vi, Me₃SiO(Me₂SiO)ₓ(MeViSiO)_{y}SiMe₃, Me₃SiO(MeViSiO)_{y}SiMe₃, ViMe₂SiO(Me₂SiO)ₓ(MeViSiO)_{y}SiMe₂Vi and ViMe₂SiO(MeViSiO)_{y}SiMe₂Vi wherein Me and Vi denote methyl and vinyl, respectively, x has a value of from greater than zero to 7000 and y has a value of from greater than zero to 350.

4. The coating composition of claim 1 wherein R¹ in the formulae for component (A) is independently selected from R and an alkenyl group having at least four carbon atoms.

5. The coating composition of claim 4 wherein R¹ is independently selected from methyl or an alkenyl group having the formula -(CH₂)ₘCH=CH₂ and -(CH₂)ₙCH=CH-(CH₂)ₚCH=CH₂ wherein m has a value of 2 to 20, n has the value of 0 to 9 and p has the value of 3, 4 or 5.

6. The coating composition of claim 4 wherein R¹ is independently selected from the group consisting of methyl, 3-butenyl, 4-pentenyl, 5-hexenyl, 6-heptenyl, 7-octenyl, 8-nonenyl, 9-decenyl, 10-undecenyl, 4,7-octadienyl, 5,8-nonadienyl, 5,9-decadienyl, 6,11-dodecadienyl and 4,8-nonadienyl.

7. The coating composition of claim 4 wherein (A) is selected from the group consisting of HexMe₂SiO(Me₂SiO)ₓSiMe₂Hex, Me₃SiO(Me₂SiO)ₓ(MeHexSiO)_{y}SiMe₃, Me₃SiO(MeHexSiO)_{y}SiMe₃, HexMe₂SiO(Me₂SiO)ₓ(MeHexSiO)_{y}SiMe₂Hex HexMe₂SiO(MeHexSiO)_{y}SiMe₂Hex wherein Me and Hex denote methyl and 5-hexenyl, respectively, x has a value of from greater than zero to 7000 and y has a value of from greater than zero to 350.

8. The coating composition of any of claims 4-7, wherein R² in the formula of component (D) is independently selected from the group consisting of hydrogen atom or radicals selected from methyl, ethyl, phenyl, vinyl, 5-hexenyl and -(CH₂)ₙCF₃ where n has a value of at least 2.

9. The coating composition of any of claims 4-8, wherein Q in the formula of component (D) is selected from the group consisting of -C(CH₃)₂-, -C(CH₃)(CH₂CH(CH₃)₂)-, -C(CH₃)(C₆H₅)- and

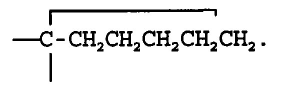

10. The coating composition of any of claims 4-9, wherein (D) is a compound having its formula selected from the group consisting of

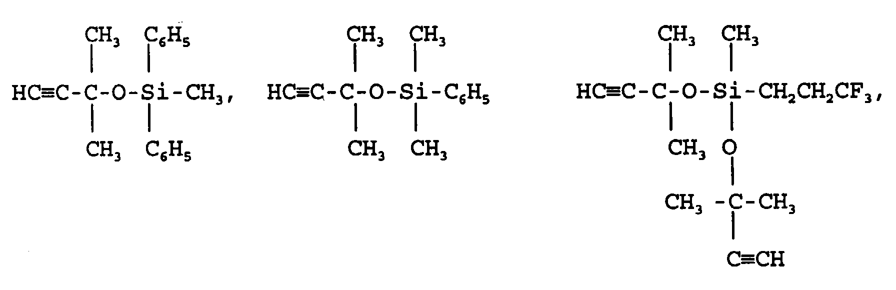

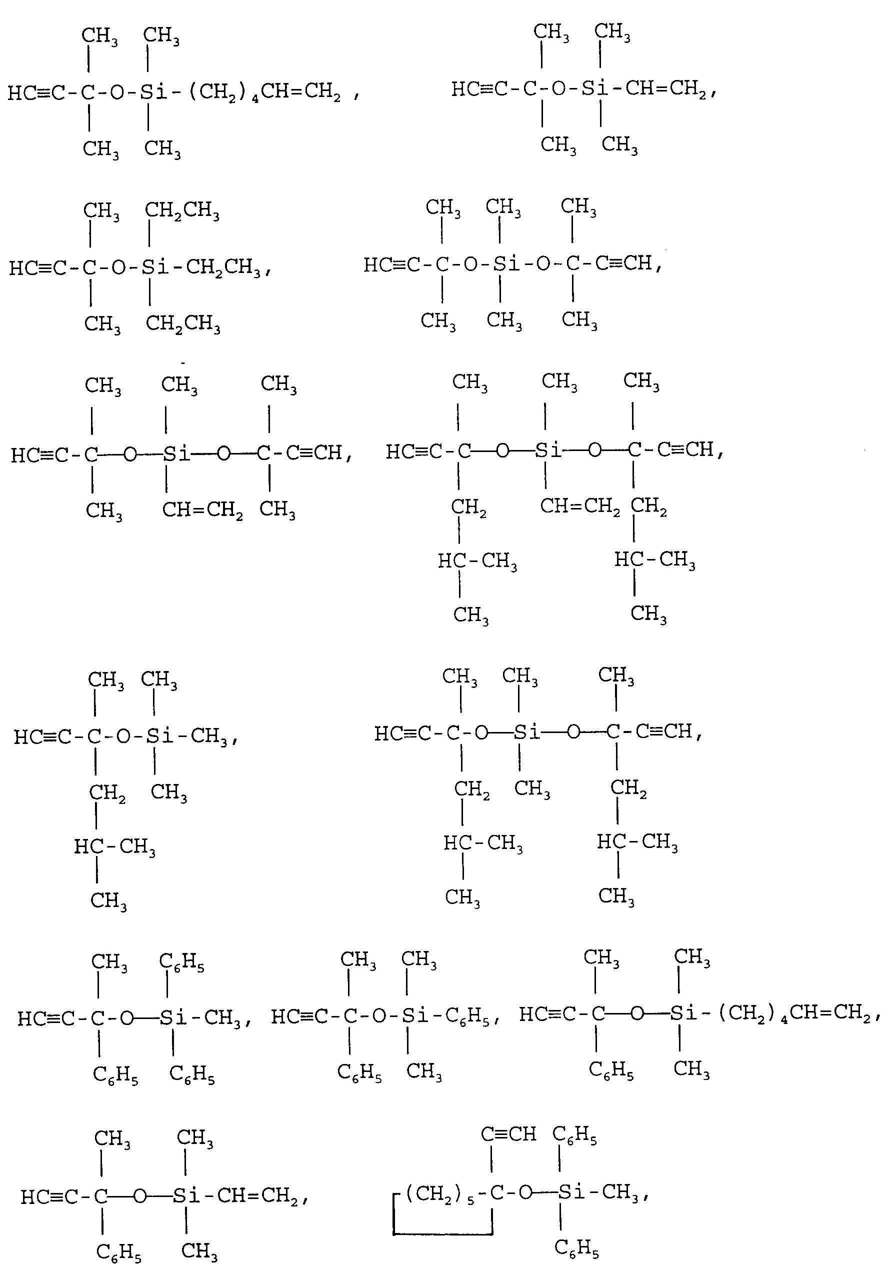

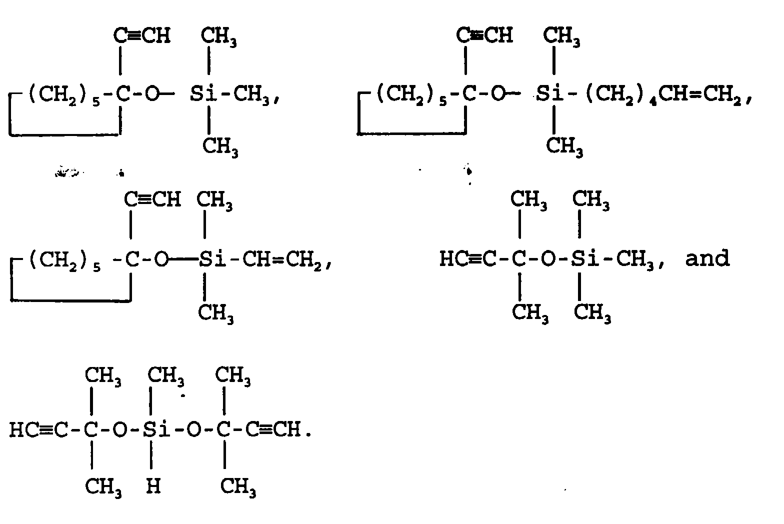

11. The coating composition of any of the preceding claims, wherein (B) is a compound having its formula selected from the group consisting of HMe₂SiO(Me₂SiO)ₐ(MeHSiO)_{b}SiMe₂H, HMe₂SiO(Me₂SiO)ₐSiMe₂H, Me₃SiO(Me₂SiO)ₐ(MeHSiO)_{b}SiMe₃, HMe₂SiO(MeHSiO)_{b}SiMe₂H and Me₃SiO(MeHSiO)_{b}SiMe₃ wherein Me denotes methyl wherein a has a value of from greater than zero to 1000 and b has a value of from greater than zero to 200.

12. The coating composition of any claims 1-10, wherein (B) is selected from the group consisting of bis(trimethylsiloxy)dimethyldihydrogen-disiloxane, heptamethylhydrogentrisiloxane, hexamethyldihydrogentrisiloxane, methylhydrogencyclosiloxanes, pentamethylpentahydrogencyclopentasiloxane, pentamethylhydrogendisiloxane, polymethylhydrogensiloxanes, tetramethyltetrahydrogencyclotetrasiloxane, tetramethyldihydrogendisiloxane and methylhydrogensiloxanedimethyl-siloxane copolymers.

13. The coating composition of any of the preceding claims, wherein (C) is selected from chloroplatinic acid or chloroplatinic acid divinyltetra-methyldisiloxane complexes.

14. The coating composition of any of the preceding claims, wherein (E) is selected from the group consisting of pentane, hexane, heptane, octane, nonane, benzene, toluene, xylene, acetone, methylethyl ketone, methylisobutyl ketone, trichloroethane, perchloroethylene and bromobenzene.

15. A method of making a curable silicone release coating composition according to any of the preceding claims comprising mixing the components (A), (B), (C), (D) and optionally (E) as defined in the preceding claims.

16. A coated article obtainable by a method comprising: (I) applying a curable silicone coating composition according to any of claims 1-14 on the surface of a substrate, and (II) exposing the coating and substrate to an energy source selected from (i) heat or (ii) actinic radiation to cure the coating and optionally (III) applying a pressure sensitive adhesive on the coated substrate after step (II).
